# EUROPÄISCHE PATENTSCHRIFT

(11) **EP 1 743 761 B1**
(45) Veröffentlichungstag und Bekanntmachung des Hinweises auf die Patenterteilung: **03.06.2009**
(21) Anmeldenummer: 06013693.4
(22) Anmeldetag: 01.07.2006
(51) Int. Cl.: B32B 1/08, B32B 15/08, F16L 9/147, B32B 27/06, B32B 27/32

(54) **Verbundrohr für die Hausinstallation**
Composite pipe for house installation
Tuyau composite pour installation domestique

(30) Priorität: 08.07.2005 DE 102005031989
(43) Veröffentlichungstag der Anmeldung: 17.01.2007
(73) Patentinhaber: Becker Plastics GmbH, 45711 Datteln (DE)
(72) Erfinder:
(74) Vertreter: Albrecht, Rainer Harald

(56) Entgegenhaltungen:
- DE-A1- 3 145 432
- DE-A1- 3 320 273
- DE-A1- 4 404 492
- DE-U1- 20 014 466
- DE-U1- 29 822 212
- GB-A- 1 588 399

## Beschreibung

Die Erfindung betrifft ein Verbundrohr, insbesondere für die Hausinstallation, mit einem innen liegenden Polymerrohr, einer Metallschicht, einer die Metallschicht mit dem Polymerrohr verbindenden ersten Haftvermittlerschicht und einer zweiten Haftvermittlerschicht, welche die Metallschicht mit einer außen liegenden Polymerschicht verbindet. Typische Einsatzgebiete derartiger Verbundrohre sind beispielsweise Sanitärinstallationen, Fußbodenheizungen, Radiatorenheizungen, Wandheizungen, Klimaböden, Kühlsysteme und Trinkwasserleitungssysteme.

Aus der Druckschrift DE 44 04 492 A1 ist ein Verbundrohr mit den eingangs beschriebenen Merkmalen bekannt. Das bekannte Verbundrohr besteht aus einem innen liegenden Polyethylenrohr, welches an seiner Außenfläche eine Haftvermittlerschicht aufweist. Als Metallschicht wird eine Aluminiumfolie verwendet, die mittels Laserstrahlschweißen zu einem über dem Polyethylenrohr angeordneten Aluminiumrohr verschweißt wird. Das Aluminiumrohr weist an seiner Außenseite eine Beschichtung aus einem Haftvermittler und einer weiteren Polyethylenschicht auf.

Die Druckschrift DE 31 45 432 A1 beschreibt ein Verbundrohr, bei dem ein Innenrohr aus Polyethylen von einer Aluminiumfolie umhüllt ist. Die Aluminiumfolie ist innen- und außenseitig mit einem Haftvermittler beschichtet. Sie weist sich überlappende Längskanten auf. Durch Aufextrudieren eines aus Polyethylen bestehenden Außenrohres auf die Aluminiumfolie werden die einzelnen Schichten des Verbundrohres durch die Extrusionswärme miteinander verbunden.

Aus der DE 200 14 466 U1 ist ein Verbundrohr mit einem Innenrohr und einem Außenrohr aus Polyethylen mittlerer Dichte und einem zwischen Innen- und Außenrohr angeordneten Aluminiumband bekannt. Auf dem Aluminiumband befindet sich beidseitig jeweils eine Haftvermittlerschicht, wobei das Außenrohr auf die an der Außenseite des Aluminiumbandes angeordnete Haftvermittlerschicht aufextrudiert wird.

Ein Verbundrohr mit den eingangs beschriebenen Merkmalen ist ferner aus DE 43 04 717 A1 bekannt. Das innen liegende Polymerrohr ist gegen die Diffusion von Gas und Dampf im Wesentlichen ungesichert. Mit einem Haftvermittler ist das innen liegende Polymerrohr fest mit einem dünnwandigen Kupferrohr verbunden, welches als gas- und dampfdichte Barriere dient. Zum Schutz des Kupferrohres vor äußeren Einflüssen, ist eine außen liegende Polymerschicht durch einen Haftvermittler mit dem Kupferrohr verbunden. Verglichen mit herkömmlichen Kupferrohren für die Hausinstallation wird die notwendige Menge an Kupfer deutlich reduziert.

Die GB 1 588 399 A beschreibt ein Verbundrohr mit einem Innenrohr aus Polyethylen, das mit einer Metallfolie umwickelt ist. Die Metallfolie besteht dabei aus Aluminium, Kupfer oder Stahl und ist mit einem schlagfesten sowie temperaturbeständigen Polymer beschichtet. Zwischen dem Polyethylenrohr und der Metallfolie ist eine Haftvermittlerschicht angeordnet.

Wie in der Druckschrift DE 101 46 406 C1 beschrieben wird, besteht bei einem Verbundrohr, welches eine metallische, rohrförmige Zwischenschicht aufweist, die Gefahr, dass das in dem Verbundrohr geförderte Medium durch die Wandung des innen liegenden Polymerrohres hindurch diffundiert und an der Metallschicht kondensiert. Die Kondensation ist insbesondere dann besonders stark, wenn über der Wandung des innen liegenden Polymerrohres ein großer Temperaturgradient mit einer zur Rohraußenseite abnehmenden Temperatur vorliegt. Entsprechende Bedingungen liegen beispielsweise bei der Verwendung eines Verbundrohres ohne zusätzliche Dämmung in einem Heizungs- oder Warmwassersystem vor.

Durch die Kondensation von Flüssigkeit zwischen dem innen liegenden Polymerrohr und der Metallschicht können sich Flüssigkeitsblasen bilden, die zu einer Deformation der Metallschicht oder des innen liegenden Polymerrohres führen.

Zur Kontrolle der Kondensation wird in DE 101 46 406 C1 ein Verbundrohr mit den Merkmalen des Oberbegriffes beschrieben, welches zwischen der Metallschicht und der daran innen liegend anschließenden Haftvermittlerschicht Ausweichzonen in Form von Rillen zur Ansammlung von Flüssigkeit aufweist, wodurch die Gefahr der Blasenbildung reduziert werden soll. Die in den Ausweichzonen kondensierte Flüssigkeit kann jedoch zu einer Erhöhung der Korrosion führen, wodurch die Metallschicht geschwächt oder sogar zerstört wird.

Vor diesem Hintergrund liegt der Erfindung die Aufgabe zugrunde, die Schwächung des Verbundrohres und die Blasenbildung durch an der Metallschicht kondensierende Flüssigkeit zu minimieren.

Erfindungsgemäß wird die Aufgabe dadurch gelöst, dass die Oberfläche des Polymerrohres eine an die erste Haftvermittlerschicht angrenzende, in einem Dünnschichtverfahren aufgebrachte Oberflächenbeschichtung aufweist, wobei die Oberflächenbeschichtung eine Barriereschicht bildet, wodurch die Durchlässigkeit für korrosive Medien, Gas und Dampf durch die Wandung des innen liegenden Polymerrohresreduziert ist. Durch die große Verbundfestigkeit von Oberflächenbeschichtung und Polymerrohr können sich keine Blasen unter der Oberflächenbeschichtung bilden. Durch die Barrierenfunktion der Oberflächenbeschichtung wird auch die Gefahr einer Blasenbildung zwischen Haftvermittlerschicht und Oberflächenbeschichtung und Haftvermittlerschicht und Metallschicht minimiert.

Vorzugsweise ist das Material der Oberflächenbeschichtung teilweise in das Material des Polymerrohres eingedrungen, und es liegt kein diskreter Übergang von dem Material des Polymerrohres zur Oberflächenbeschichtung vor, wodurch die Oberflächenbeschichtung dauerhaft auf dem Polymerrohr verankert ist. Es entsteht so ein kontinuierlicher Übergangsbereich in dem mit der Abnahme des Anteiles des Materials des Polymerrohres der Anteil des Materiales der Oberflächenbeschichtung zunimmt. Die Dicke der Oberflächebeschichtung liegt typischerweise zwischen 10 nm und wenigen Mikrometern, wobei bei einem kontinuierlichen Schichtübergang die Schichtdicke der Oberflächenbeschichtung auf die Position bezogen wird, an der das Material der Oberflächenbeschichtung und das des Polymerrohres in gleichen Volumenkonzentrationen vorliegen.

Die Oberflächenbeschichtung kann beispielsweise durch eine mikroskopische Veränderung der Oberflächenstruktur des Polymerrohres zu einer Erhöhung der Haftkraft der Haftvermittlerschicht auf dem innen liegenden Polymerrohr führen, wodurch die Gefahr einer Delamination zusätzlich reduziert wird.

Die Oberflächenbeschichtung besteht vorzugsweise im Wesentlichen aus SiOₓ, Metall, einer Metalllegierung, einem Metalloxid oder amorphem Kohlenstoff. Zusätzlich zu diesen wesentlichen Bestandteilen kann die Oberflächenbeschichtung auch weitere funktionelle Bestandteile oder Verschmutzungen aufweisen. So hat beispielsweise amorpher Kohlenstoff, der in einem Plasmaverfahren abgeschieden ist, typischerweise eine unregelmäßige, netzartige Struktur, wobei freie Verbindungen der einzelnen Kohlenstoffatome, die nicht Bestandteil der netzartigen Struktur sind, abhängig von der Prozessführung beispielsweise mit Wasserstoff abgeschlossen sind. Qberflächenbeschichtungen, die im Wesentlichen aus SiOₓ bestehen, weisen häufig eine ausgesprochen gute Barriereeigenschaft auf, wobei durch eine geringe Schichtdicke und eine gute Verankerung mit dem Polymerrohr eine hohe Flexibilität der Oberflächenbeschichtung erreicht werden kann. Weitere im Rahmen der Erfindung geeignete Oberflächenbeschichtungen bestehen im Wesentlichen aus einem Metall oder einer Metalllegierung, einschließlich von Metall-Oxid und Metall-Stickstoff Verbindungen.

Neben Polymeren wie beispielsweise Polybutylen, Polyamid und Polypropylen ist besonders Polyethylen (PE), vorzugsweise ein physikalisch und/oder chemisch vernetztes Polyethylen (PE-X), als Material des innen liegenden Polymerrohres geeignet. Die Metallschicht besteht in einer bevorzugten Ausführung der Erfindung aus Aluminium oder rostfreiem Stahl, wobei die Dicke dieser Schicht typischerweise zwischen 100 µm und 1500 µm liegt. Die Metallschicht ist durch die zweite Haftvermittlerschicht mit der außen liegenden Polymerschicht verbunden, die die Metallschicht mechanisch schützt und eine Schädigung der Metallschicht durch Oxidation oder Korrosion verhindern soll. Als Material der ersten und zweiten Haftvermittlerschicht sind besonders anhydrid-modifizierte Polyolefine, Reaktionsklebstoffe (Epoxide), acrylat-modifizierte Kunststoffe und thermoplastische Klebstoffe auf Basis von Ethylen-Vinylacetat-Copolymeren (EVAC) geeignet.

Gegenstand der Erfindung ist auch ein Verfahren nach Anspruch 9 zur Herstellung des beschriebenen Verbundrohres. Erfindungsgemäß wird auf die Oberfläche eines Polymerrohres in einer Beschichtungsvorrichtung in einem Dünnschichtverfahren eine Oberflächenbeschichtung aufgebracht. Danach werden in weiteren Verfahrensschritten auf die mit der Oberflächenbeschichtung versehene Oberfläche des Polymerrohres eine erste Haftvermittlerschicht aufgebracht, auf die erste Haftvermittlerschicht eine Metallschicht aufgebracht, eine zweite Haftvermittlerschicht auf die Metallschicht und nachfolgend eine außen liegende Polymerschicht auf die zweite Haftvermittlerschicht aufgebracht. Die einzelnen Verfahrensschritte werden vorzugsweise direkt in einer Verfahrensfolge aneinander anschließend durchgeführt, wobei das Dünnschichtverfahren zur Oberflächenbeschichtung als Inlineprozess in die Verfahrensfolge integriert ist. Das beschriebene Verfahren kann mit vorgefertigten Polymerrohren als Ausgangsmaterial durchgeführt werden oder alternativ direkt an die Extrusion der Polymerrohre anschließen.

Die Oberflächenbeschichtung kann unter Vakuum oder bei Atmosphärendruck aus der Gasphase abgeschieden werden. Das Material bzw. Bestandteile der Oberflächenbeschichtung können dabei in einem Verdampfungs- oder Zerstäubungsprozess, beispielsweise durch Magnetron-Sputtern, Flammbeschichtung, eine Elektronenstrahl-Verdampfungsanlage oder einen thermischen Verdampfungsofen, bereitgestellt werden. Zusätzlich oder alternativ kann in der Beschichtungsvorrichtung auch ein Plasmaprozess zur Oberflächenbeschichtung angewandt werden. Zur Durchführung der Oberflächenbeschichtung wird der Beschichtungsvorrichtung ein Prozessgas zugeführt, wobei dem Prozessgas bei der Beschichtung unterschiedliche Funktionen zukommen können. Das Prozessgas kann beispielsweise als Trägermedium von verdampften oder zerstäubten Materialien dienen. Des Weiteren kann das Prozessgas die Erzeugung und Aufrechterhaltung eines Plasmas gewährleisten, wobei bei einem Plasmaprozess sowohl die Bestandteile der Gasphase als auch der Oberfläche des Polymerrohres modifiziert und fragmentiert werden können.

Für die Durchführung eines Plasmaprozesses können verschiedene Plasmaquellen, beispielsweise Bogenentladungen, Plasmafackeln, mikrowellenerzeugte Plasmen, Barriereentladungen, kapazitiv oder induktiv erzeugte Radiofrequenzentladungen, eingesetzt werden. Durch ein Plasmaverfahren ist es möglich, neutrale oder ionisierte Atome, Moleküle oder Molekülfragmente mit einer erhöhten kinetischen Energie auf die Oberfläche aufzubringen, wodurch diese einerseits in das Material eindringen können und andererseits die oberfilächliche Bindungsstruktur der Polymere verändern können. Plasmaverfahren zeichnen sich besonders dadurch aus, dass die Abscheidung von Oberflächenbeschichtung ohne eine ohne thermische Belastung, abhängig von der genauen Prozessführung, bei oder leicht oberhalb der Umgebungs- und Materialtemperatur durchgeführt werden kann.

Im Rahmen der Erfindung liegt auch die Durchführung eines mehrstufigen Dünnschichtverfahrens. So ist es beispielsweise möglich, in einem ersten Schritt beispielsweise durch eine Flamme oder ein Plasma mit einem Überschuss an Sauerstoff die Oberfläche des Polymerrohres zu reinigen und/oder teilweise abzutragen.

Die Metallschicht wird vorzugsweise aus einer Folie gebildet, die um die erste Haftvermittlerschicht gebogen und anschließend zu einem geschlossenen Rohr verschweißt wird. Im Folgenden wird die Erfindung anhand einer lediglich ein Ausführungsbeispiel darstellenden Zeichnung näher erläutert. Es zeigen:
- Fig. 1: den Schichtaufbau eines erfindungsgemäßen Verbundrohres, und
- Fig. 2: ein Verfahrensschema zu dessen Herstellung.

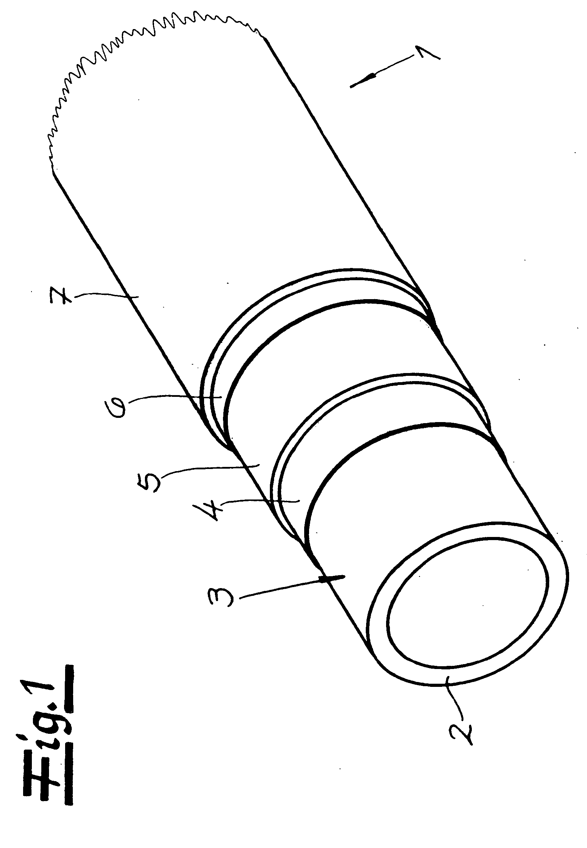

In Fig. 1 ist ein erfindungsgemäßes Verbundrohr 1 für die Hausinstallation dargestellt. Das innen liegende Polymerrohr 2 aus vernetztem Polyethylen (PE-X) weist eine in einem Dünnschichtverfahren aufgebrachte Oberflächenbeschichtung 3 auf, wobei das Material der Oberflächenbeschichtung 3 teilweise in das Material des Polymerrohres 2 eingedrungen ist und kein diskreter Übergang von dem Material des Polymerrohres 2 zur Oberflächenbeschichtung 3 vorliegt. Im Gegensatz zu einem unbeschichteten Polymerrohr 2 aus Polyethylen weist das mit der Oberflächenbeschichtung 3 versehene Polymehrrohr 2 eine sehr glatte Oberfläche, die im Wesentlichen aus SiOₓ, einem Metall, einer Metalllegierung, einem Metalloxid oder aus amorphem Kohlenstoff besteht, eine sehr glatte und gleichmäßige Oberfläche auf, weshalb die Haftfähigkeit der angrenzenden ersten Haftvermittlerschicht 4 auf dem innen liegenden Polymerrohr 2 erhöht ist. Das Polymerrohr 2 ist durch die erste Haftvermittlerschicht 4 mit einer Metallschicht 5 aus Aluminium verbunden, die eine Dicke zwischen 100 µm und 1500 µm aufweist. Die Metallschicht 5 ist mit einer zweiten Haftvermittlerschicht 6 mit einer außen liegenden Polymerschicht 7 verbunden, die aus Polyethylen besteht. Als Material für die Haftvermittlerschichten 4, 6 eigenen sich beispielsweise anhydrit-modifizierte Polyolefine, Reaktionsklebstoffe (Epoxide), acrylat-modifizierte Kunststoffe und thermoplastische Klebstoffe auf Basis von Ethylen-Vinylacetat-Copolymeren (EVAC).

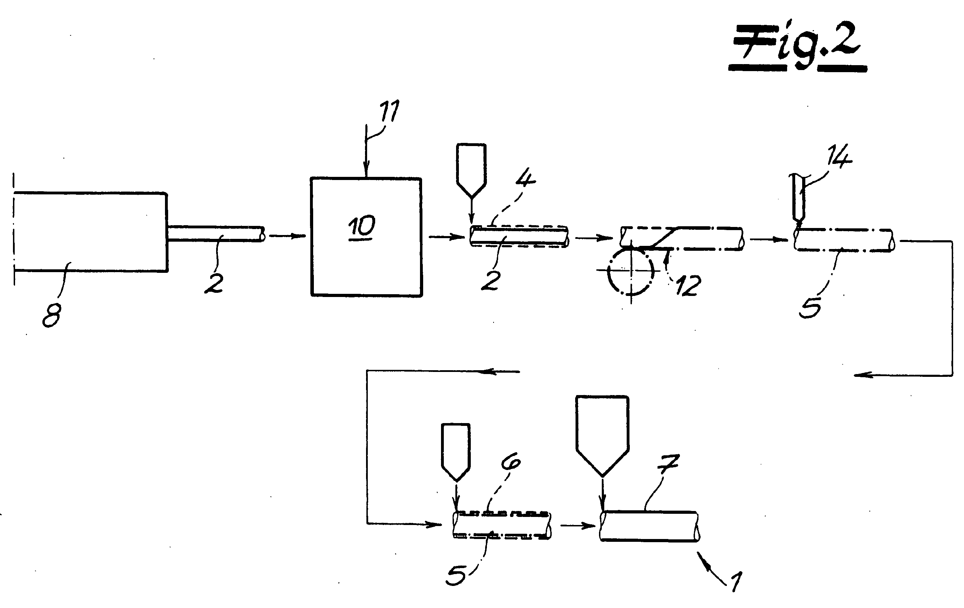

Bei dem in Fig. 2 dargestellten Verfahren wird ein Polymerrohr 2 aus Polyethylen in einem Extruder 8 gefertigt und mittels einer nicht dargestellten Elektronenstrahlanlage elektronenstrahlvernetzt (PE-Xc). Anschließend wird das Polymerrohr 2 einer Beschichtungsvorrichtung 10 zugeführt, in der in einem Dünnschichtverfahren eine Oberflächenbeschichtung 3 aufgebracht wird. In der Beschichtungsvorrichtung 10, die bei Atmosphärendruck arbeitet, wird ein Bestandteil der Oberflächenbeschichtung 3 durch einen Verdampfungsprozess oder Zerstäubungsprozess aus dem Material eines Festkörpers oder einer organischen Flüssigkeit gewonnen. Zusätzlich wird der Beschichtungsvorrichtung 10 ein Prozessgas 11 zugeführt. In der Beschichtungsvorrichtung 10 wird ein Plasmaprozess durchgeführt, bei dem das Prozessgas 11 fragmentiert wird und sich mit dem verdampften bzw. zerstäubten Material vermischt. Die Oberflächenbeschichtung 3 wird aus diesem Plasmaprozess abgeschieden, wobei Bestandteile des Plasmas mit hoher kinetischer Energie auf die Oberfläche des Polymerrohres 2 treffen und teilweise in das Material des Polymerrohres 2 eindringen können.

Nach dem Auftragen einer ersten Haftvermittlerschicht 4 wird eine 100 µm bis 1500 µm dicke Metallfolie 12 U-förmig um das mit der ersten Haftvermittlerschicht 4 versehene Polymerrohr 2 gebogen und zu einem zylindrischen Mantel weiter umgeformt. Darauf folgend wird die Metallfolie 12 mit einer Schweißvorrichtung 14 zu einem um den Umfang geschlossenen Metallrohr verschweißt. Anschließend wird eine zweite Haftvermittlerschicht 6 auf die Metallschicht 5 aufgetragen, bevor abschließend eine außen liegende Polymerschicht 7 aus Polyethylen als Mantel aufgebracht wird.

## Patentansprüche

1. Verbundrohr (1), insbesondere für die Hausinstallation, mit einem innen liegenden Polymerrohr (2), einer Metallschicht (5), einer die Metallschicht (5) mit dem Polymerrohr (2) verbindenden ersten Haftvermittlerschicht (4) und einer zweiten Haftvermittlerschicht (6), welche die Metallschicht (5) mit einer außen liegenden Polymerschicht (7) verbindet, **dadurch gekennzeichnet, dass** die Oberfläche des Polymerrohres (2) eine an die erste Haftvermittlerschicht (4) angrenzende, in einem Dünnschichtverfahren aufgebrachte Oberflächenbeschichtung (3) aufweist, wobei die Oberflächenbeschichtung (3) eine Barriereschicht bildet, wodurch die Durchlässigkeit für korrosive Medien, Gas und Dampf durch die Wandung des innen liegenden Polymerrohres (2) reduziert ist.

2. Verbundrohr (1) nach Anspruch 1, **dadurch gekennzeichnet, dass** das Polymerrohr (2) aus Polyethylen (PE), vorzugsweise einem vernetzten Polyethylen (PE-X), besteht.

3. Verbundrohr (1) nach Anspruch 1 oder 2, **dadurch gekennzeichnet, dass** die Metallschicht (5) aus Aluminium oder rostfreiem Stahl besteht.

4. Verbundrohr (1) nach einem der Ansprüche 1 bis 3, **dadurch gekennzeichnet, dass** das Material der Oberflächenbeschichtung (3) teilweise in das Material des Polymerrohres (2) eingedrungen ist und kein diskreter Übergang von dem Material des Polymerrohres (2) zur Oberflächenbeschichtung (3) vorliegt.

5. Verbundrohr (1) nach einem der Ansprüche 1 bis 4, **dadurch gekennzeichnet, dass** die Haftfähigkeit der ersten Haftvermittlerschicht (4) auf dem innen liegenden Polymerrohr (2) durch die Oberflächenbeschichtung (3) erhöht ist.

6. Verbundrohr (1) nach einem der Ansprüche 1 bis 5, **dadurch gekennzeichnet, dass** die Oberflächenbeschichtung (3) im Wesentlichen aus SiOₓ besteht.

7. Verbundrohr (1) nach einem der Ansprüche 1 bis 5, **dadurch gekennzeichnet, dass** die Oberflächenbeschichtung (3) im Wesentlichen aus einem Metall, einer Metalllegierung oder einem Metalloxid besteht.

8. Verbundrohr (1) nach einem der Ansprüche 1 bis 5, **dadurch gekennzeichnet, dass** die Oberflächenbeschichtung (3) im Wesentlichen aus amorphem Kohlenstoff besteht.

9. Verfahren zur Herstellung eines Verbundrohres (1) nach einem der Ansprüche 1 bis 8, wobei
auf die Oberfläche eines Polymerrohres (2) in einer Beschichtungsvorrichtung (10) in einem Dünnschichtverfahren eine Oberflächenbeschichtung (3) als Barriereschicht zur Reduzierung der Durchlässigkeit für korrosive Medien, Gas und Dampf durch die Wandung des innen liegenden Polymerrohres (2) aufgebracht wird,
auf die mit der Oberflächenbeschichtung (3) versehene Oberfläche des Polymerrohres (2) eine erste Haftvermittlerschicht (4) aufgebracht wird,
auf die erste Haftvermittlerschicht (4) eine Metallschicht (5) aufgebracht wird,
eine zweite Haftvermittlerschicht (6) auf die Metallschicht (5) und nachfolgend eine außen liegende Polymerschicht (7) auf die zweite Haftvermittlerschicht (6) aufgebracht wird.

10. Verfahren nach Anspruch 9, **dadurch gekennzeichnet, dass** die Metallschicht (5) als Folie um die erste Haftvermittlerschicht (4) gebogen und zu einem Metallrohr verbunden wird.

11. Verfahren nach Anspruch 9 oder 10, **dadurch gekennzeichnet, dass** die Oberflächenbeschichtung (3) durch ein Gasphasenabscheidungsverfahren, einschließlich von Plasmaprozessen, erzeugt wird.

12. Verfahren nach Anspruch 11, **dadurch gekennzeichnet, dass** die Oberflächenbeschichtung (3) unter Anwendung eines Plasmaprozesses erzeugt wird.

13. Verfahren nach Anspruch 11 oder 12, **dadurch gekennzeichnet, dass** die Oberflächenbeschichtung (3) durch einen Verdampfungsprozess oder Zerstäubungsprozess, vorzugsweise in Kombination mit einem Plasmaprozess erzeugt wird.

14. Verfahren nach einem der Ansprüche 9 bis 13, **dadurch gekennzeichnet, dass** zur Herstellung der Oberflächenbeschichtung (3) der Beschichtungsvorrichtung (10) ein Prozessgas (11) zugeführt wird.

15. Verfahren nach einem der Ansprüche 9 bis 14, **dadurch gekennzeichnet, dass** die Oberflächenbeschichtung (3), zumindest teilweise, aus den Bestandteilen und Fragmenten des der Beschichtungsvorrichtung (10) zugeführten Prozessgases (11) gebildet wird.

16. Verfahren nach einem der Ansprüche 9 bis 15, **dadurch gekennzeichnet, dass** zusätzlich zu der Oberflächenbeschichtung (3) die Oberflächentextur des Polymerrohres (2) bei dem Dünnschichtverfahren verändert wird.

## Claims

1. A composite tube (1), for house installation in particular, with an inlaid polymer tube (2), a metallic coating (5), a first adhesion agent coating (4) connecting the metallic coating (5) with the polymer tube (2) and a second adhesion agent coating (6) that connects the metallic coating (5) with an external polymer coating (7), **characterised in that** the surface of the polymer tube (2) features a surface coating (3), applied in a thin layer process, adjoining the first adhesion agent coating (4), wherein the surface coating (3) forms a barrier layer through which the permeability to corrosive media, gas and steam through the wall of the inlaid polymer tube (2) is reduced.

2. The composite tube (1) according to Claim 1, **characterised in that** the polymer tube (2) made of polyethylene (PE) preferably consists of a crosslinked polyethylene (PE-X).

3. The composite tube (1) according to Claim 1 or 2 **characterised in that** the metallic coating (5) consists of aluminium or stainless steel.

4. The composite tube (1) according to one of Claims 1 to 3 **characterised in that** the material of the surface coating (3) partially penetrates into the material of the polymer tube (2) and no discrete transition exists from the material of the polymer tube (2) to the surface coating (3).

5. The composite tube (1) according to one of Claims 1 to 4, **characterised in that** the adhesiveness of the first adhesion agent coating (4) on the inlaid polymer tube (2) is increased by the surface coating (3).

6. The composite tube (1) according to one of Claims 1 to 5 **characterised in that** the surface coating (3) essentially consists of SiOₓ.

7. The composite tube (1) according to one of Claims 1 to 5 **characterised in that** the surface coating (3) essentially consists of a metal, a metallic alloy or a metallic oxide.

8. The composite tube (1) according to one of Claims 1 to 5 **characterised in that** the surface coating (3) essentially consists of amorphous carbon.

9. A process for manufacturing a composite tube (1) according to one of Claims 1 to 8, wherein on the surface of a polymer tube (2) in a coating apparatus (10) in a thin layer process a surface coating (3) as a barrier layer for reducing the permeability to corrosive media, gas and steam through the wall of the inlaid polymer tube (2) is applied, on which the (3) surface of the polymer tube (2) provided with the surface coating, a first adhesion agent coating (4) is applied, on the first adhesion agent coating (4) a metallic coating (5) is applied, a second adhesion agent coating (6) is applied on the metallic coating (5) and subsequently an external polymer coating (7) is applied on the second adhesion agent coating (6).

10. The process according to Claim 9 **characterised in that** the metallic coating (5) is folded as foil around the first adhesion agent coating (4) and connected to form a metal tube.

11. The process according to Claim 9 or 10 **characterised in that** the surface coating (3) is generated through a gas-phase depositing process including a plasma process.

12. The process according to Claim 11 **characterised in that** the surface coating (3) is generated by applying a plasma process.

13. The process according to Claim 11 or 12, **characterised in that** the surface coating (3) is generated through a vaporisation process or an atomisation process, preferably in a combination with a plasma process.

14. The process according to one of Claims 9 to 13 **characterised in that** for the manufacture of the surface coating (3) a process gas (11) is fed into the coating apparatus (10).

15. The process according to one of Claims 9 to 14 **characterised in that** the surface coating (3), at least partially, is formed from constituent materials and fragments of the process gas (11) fed into the coating apparatus (10).

16. The process according to one of Claims 9 to 15 **characterised in that** in addition to the surface coating (3) the surface texture of the polymer tube (2) is changed in the thin layer process.

## Revendications

1. Tube composite (1) notamment pour tuyauterie domestique, comprenant un tube intérieur (2) en polymère, une couche métallique (5), une première couche de pontage (4) reliant la couche métallique (5) et le tube (2) en polymère, et une deuxième couche de pontage (6) reliant la couche métallique (5) avec une couche extérieure (7) de polymère, **caractérisé en ce que** la surface du tube (2) en polymère présente un revêtement superficiel (3) - appliqué selon un procédé à couche mince - limitrophe de la première couche de pontage (4), ledit revêtement (3) superficiel formant une couche barrière qui réduit la perméabilité de la paroi du tube intérieur (2) en polymère aux fluides corrosifs, au gaz et à la vapeur.

2. Tube composite (1) selon la revendication 1, **caractérisé en ce que** le tube (2) en polymère se compose de polyéthylène (PE), de préférence d'un polyéthylène réticulé (PE-X).

3. Tube composite (1) selon la revendication 1 ou 2, **caractérisé en ce que** la couche métallique (5) se compose d'aluminium ou d'acier inoxydable.

4. Tube composite (1) selon l'une des revendications 1 à 3, **caractérisé en ce que** le matériau composant le revêtement superficiel (3) a pénétré en partie dans le matériau du tube (2) en polymère et qu'il n'y a pas de transition discrète du matériau du tube (2) en polymère vers le revêtement superficiel (3).

5. Tube composite (1) selon l'une des revendications 1 à 4, **caractérisé en ce que** l'adhésivité de la première couche de pontage (4) sur le tube intérieur (2) en polymère se trouve accrue par le revêtement superficiel (3).

6. Tube composite (1) selon l'une des revendications 1 à 5, **caractérisé en ce que** le revêtement superficiel (3) se compose essentiellement de SiOx.

7. Tube composite (1) selon l'une des revendications 1 à 5, **caractérisé en ce que** le revêtement superficiel (3) se compose essentiellement d'un métal, d'un alliage de métaux ou d'un oxyde métallique.

8. Tube composite (1) selon l'une des revendications 1 à 5, **caractérisé en ce que** le revêtement superficiel (3) se compose essentiellement de carbone amorphe.

9. Procédé destiné à la fabrication d'un tube composite (1) selon l'une des revendications 1 à 8, consistant à
appliquer sur la surface d'un tube (2) en polymère, dans un dispositif (10) d'enduction (10), selon un procédé à couche mince, un revêtement (3) superficiel officiant de couche barrière pour réduire la perméabilité de la paroi du tube intérieur (2) en polymère aux fluides corrosifs, au gaz et à la vapeur,
appliquer une première couche de pontage (4) sur la surface du tube (2) en polymère dotée du revêtement superficiel (3),
appliquer une couche métallique (5) sur la première couche de pontage (4),
appliquer une deuxième couche de pontage (6) sur la couche métallique (5) et ensuite à appliquer une couche extérieure (7) de polymère sur la deuxième couche de pontage (6).

10. Procédé selon la revendication 9, **caractérisé en ce que** l'on incurve autour de la première couche de pontage (4) la feuille constituant la couche métallique (5) et l'unit pour former un tube métallique.

11. Procédé selon la revendication 9 ou 10, **caractérisé en ce que** l'on génère le revêtement superficiel (3) par un procédé à séparation de phase gazeuse, y compris des processus plasmatiques.

12. Procédé selon la revendication 11, **caractérisé en ce que** l'on génère le revêtement superficiel (3) en utilisant un processus plasmatique.

13. Procédé selon la revendication 11 ou 12, **caractérisé en ce que** l'on génère le revêtement superficiel (3) au moyen d'un processus d'évaporation ou d'un processus de vaporisation, de préférence en association avec un processus plasmatique.

14. Procédé selon l'une des revendications 9 à 13, **caractérisé en ce que** pour fabriquer un revêtement superficiel (3), on fait entrer un gaz processuel (11) dans le dispositif d'enduction (10).

15. Procédé selon l'une des revendications 9 à 14, **caractérisé en ce que** le revêtement superficiel (3) se forme, au moins en partie, à partir des constituants et fragments du gaz processuel (11) amené dans le dispositif d'enduction (10).

16. Procédé selon l'une des revendications 9 à 15, **caractérisé en ce qu'**en plus du revêtement superficiel (3), on modifie la texture superficielle du tube (2) en polymère au cours du procédé d'application en couche mince.
